# EUROPÄISCHE PATENTSCHRIFT

(11) **EP 3 461 583 B1**
(45) Veröffentlichungstag und Bekanntmachung des Hinweises auf die Patenterteilung: **11.01.2023**
(21) Anmeldenummer: 18193220.3
(22) Anmeldetag: 07.09.2018
(51) Int. Cl.: B23P 11/02, H05B 6/14

(54) **VORRICHTUNG ZUM HALTEN UND ERHITZEN VON ADAPTER ZUM HALTEN VON WERKZEUGEN**
DEVICE FOR HOLDING AND HEATING ADAPTER FOR HOLDING TOOLS
DISPOSITIF DE MAINTIEN ET DE CHAUFFAGE POUR ADAPTATEUR PORTE OUTILS

(30) Priorität: 07.09.2017 DE 102017215837
(43) Veröffentlichungstag der Anmeldung: 03.04.2019
(73) Patentinhaber: Haimer GmbH, 86568 Hollenbach-Igenhausen (DE)
(72) Erfinder: Haimer, Josef, 86568 Hollenbach-Igenhausen (DE); Haimer, Franz, 86568 Hollenbach-Igenhausen (DE)
(74) Vertreter: Weickmann & Weickmann PartmbB

(56) Entgegenhaltungen:
- EP-A1- 2 305 407
- DE-A1- 10 218 292
- DE-U1- 20 203 783
- DE-U1-202004 013 916

## Beschreibung

Die vorliegende Erfindung betrifft eine Vorrichtung zum Erhitzen von Adaptern zum Halten von einem Werkzeug für den Einsatz in Werkzeugmaschinen, umfassend ein Basisteil, in welchem ein Adapter zum Einführen oder Entnehmen des Werkzeugs derart anordenbar ist, dass sich die Einführrichtung des Werkzeugs auf das Basisteil zu erstreckt, und ein Heizteil, welches dazu eingerichtet ist, den in dem Basisteil angeordneten Adapter zu erhitzen, wobei das Basisteil und das Heizteil in der Einführrichtung des Werkzeugs gegeneinander verlagerbar sind.

Die EP 2 305 407 A1 zeigt eine Vorrichtung zum Erhitzen von Adaptern nach dem Oberbegriff von Anspruch 1. Dort sind die formschlüssig zusammenwirkenden Kegel gewindefrei.

Zum Halten von Werkzeugen in Werkzeugmaschinen sind auch heute noch Spannzangenfutter stark verbreitet. In diesen Spannzangenfuttern ist ein Innenkegel vorgesehen, der an die Form der das Werkzeug aufnehmenden Spannzange angepasst ist. Durch das Anziehen einer Überwurfmutter wird bei Montage des Werkzeugs in dem Spannzangenfutter die Spannzange in den Innenkegel des Futters gedrückt, wobei hierbei im Umfang der Spannzange vorgesehene Schlitze zusammengedrückt werden und das Werkzeug durch diesen radial nach innen wirkenden Druck in dem Spannzangenfutter festgespannt wird.

Da eine solche Montage einer Spannzange aber mit verschiedenen Nachteilen behaftet ist, beispielsweise dadurch, dass die angesprochenen Schlitze in der Spannzange für eine asymmetrische Krafteinleitung sorgen, haben sich in letzter Zeit Schrumpffutter am Markt durchgesetzt. Derartige Schrumpffutter weisen prinzipiell Abmessungen auf, die bereits ein festes Einspannen des Werkzeugs ermöglichen, wobei sie zum Einsetzen des Werkzeugs stark erhitzt werden und sich durch die thermische Ausdehnung ihres Materials soweit aufweiten, dass das Werkzeug in sie eingesetzt werden kann. Nach einem anschließenden Abkühlvorgang liegt das Werkzeug dann eng an der Innenwand des Schrumpffutters an und wird in absolut symmetrischer Weise von dem Schrumpffutter gehalten.

Damit bestehende Anlagen und Werkzeugmaschinen mit Spannzangenfuttern weiterhin verwendet werden können und gleichzeitig die genannten Vorteile von Schrumpffuttern ausgenutzt werden können, sind Adapter auf den Markt gebracht worden, deren äußere Form prinzipiell der einer Spannzange entspricht, so dass diese Adapter dann in ähnlicher Weise wie Spannzangen in Spannzangenfutter eingesetzt werden können und dort das Werkzeug halten. Derartige Adapter sind allerdings während des zum Einsetzen bzw. Entfernen des Werkzeugs bestimmten Erhitzungsvorgangs, dem sogenannten Schrumpfprozess zum Einschrumpfen bzw. Ausschrumpfen des Werkzeugs, weniger einfach zu handhaben als ein vollständiges Schrumpffutter. Ein Erhitzen des Adapters, während er in einem Spannzangenfutter aufgenommen ist, ist andererseits technisch kaum möglich, wodurch der Adapter separat gehandhabt werden muss. Seine geringe axiale Höhe und seine geringe mechanische Stabilität erschweren dies jedoch.

In diesem Zusammenhang ist eine Vorrichtung zum Erhitzen derartiger Adapter bekannt, in der diese in eine Art Ersatzschrumpffutter eingelegt werden, hierbei jedoch nicht gegen Verdrehen oder sonstige Bewegungen gesichert werden. Die mit dieser bekannten Vorrichtung durchgeführten Schrumpfprozesse haben jedoch den Nachteil, dass wenn das Werkzeug wieder aus dem erwärmten Adapter herausgezogen werden soll, es sich verkanten kann oder es sich aus anderen Gründen, wie beispielsweise bei einer Verschmutzung oder einer versehentlichen Miterhitzung des Ersatzschrumpffutters, nicht reibungslos entfernen lässt.

Des Weiteren muss auch das Ersatzschrumpffutter zusammen mit dem Adapter erwärmt werden, was einen erheblichen zusätzlichen Energie- und Zeitaufwand mit sich bringt. Zuletzt ist in dem beschriebenen Verfahren die Geometrie des Adapters beschränkt, da durch die zusätzliche Energieeinbringung zum Miterwärmen des Ersatzfutters Adapter mit dünnwandigen Abschnitten einer zu großen thermischen Belastung ausgesetzt würden, so dass in allen Bereichen des Adapters eine nicht unerhebliche minimale Wanddicke eingehalten werden muss.

Aufgabe der Erfindung ist es, eine gattungsgemäße Vorrichtung, ein System, dessen Verwendung und einen Adapter anzugeben, womit der Adapter wiederholgenau präzise an der Haltevorrichtung montiert werden kann.

Zur Lösung der Aufgabe wird eine Vorrichtung nach Anspruch 1, ein System nach Anspruch 6, dessen Verwendung nach Anspruch 14 und ein Adapter nach Anspruch 15 angegeben.

Da entsprechende Adapter in der Regel zylindersymmetrisch sind, ist es nicht unbedingt nötig, dass die Haltevorrichtung sie auch bezüglich ihrer Winkelorientierung fest an dem Basisteil haltert, dies kann jedoch ebenfalls wünschenswert sein, so dass sich der Begriff "ortsfest haltern" in der vorliegenden Anmeldung wenigstens auf eine feste räumliche Orientierung und gegebenenfalls zusätzlich auf eine feste Winkelorientierung zwischen Basisteil und gehaltertem Adapter bezieht.

Prinzipiell können beliebige geeignete Heizvorrichtungen in dem Heizteil zum Erhitzen des Adapters zum Einsatz kommen, beispielsweise Heißluftgebläse oder Ähnliches. In einer bevorzugten Ausführungsform ist in dem Heizteil jedoch wenigstens eine Induktionsspule vorgesehen, welche dazu eingerichtet ist, in ihrem Innenraum, in dem der gehalterte Adapter im Betrieb der erfindungsgemäßen Vorrichtung angeordnet ist, also wenn ein Schrumpfprozess durchgeführt wird, elektromagnetische Wechselfelder zu erzeugen, die wiederum Wirbelströme in dem Adapter induzieren, durch die sich dieser aufgrund seines Ohm'schen Widerstands aufheizt. Es versteht sich, dass derartige Adapter demnach aus Materialen gebildet sein müssen, die neben den üblichen thermischen und mechanischen Festigkeitsanforderungen es auch ermöglichen müssen, sie in induktiver Weise aufzuheizen.

Dementgegen kann es vorteilhaft sein, wenn die Haltevorrichtung in der erfindungsgemäßen Vorrichtung aus elektrisch und/oder magnetisch schwachleitendem oder nichtleitendem Material gebildet ist. Durch diese Maßnahme wird sowohl die magnetische Abschirmwirkung der Haltevorrichtung als auch ihre Eigenerwärmung bei induktiver Erwärmung des Adapters gering gehalten. Konkret kann daran gedacht werden, die Haltevorrichtung ganz oder teilweise aus Edelstahl oder Aluminium herzustellen oder auch aus geeigneten Kunststoffen.

Um ein sicheres Haltern des Adapters durch die Haltevorrichtung insbesondere in radialer Richtung des Adapters sicherstellen zu können, kann die Haltevorrichtung dazu eingerichtet sein, beim Haltern des Adapters diesen abschnittsweise vollumfänglich zu umschließen. Hierdurch wird ein Verkanten oder ein Kippen des Adapters, während er von der Haltevorrichtung gehaltert wird, zuverlässig ausgeschlossen.

Um dennoch bei einem vollumfänglichen Umschließen des Adapters durch die Haltevorrichtung und dem damit verbundenen Abschirmen des Adapters gegenüber dem Wechselfeld der Induktionsspule eine ausreichende Erwärmung des umschlossenen Abschnitts des Adapters sicherstellen zu können, kann die Haltevorrichtung im Abschnitt der vollumfänglichen Umschließung des Adapters eine oder mehrere Durchbrechungen aufweisen, in welchen sich magnetisierbare Elemente in Richtung des gehalterten Adapters erstrecken. Hierbei kann konkret beispielsweise daran gedacht werden, dass im Bereich der Haltevorrichtung ein Element aus Ferrit oder einem ähnlichen, elektrisch schwach aber magnetisch stark leitenden Material vorgesehen wird, das die Haltevorrichtung umfänglich umschließt und in ihre Durchbrechungen eingreift beziehungsweise vorsteht.

Dieses Ferritelement kann dann vorzugsweise derart bemessen sein, dass die in die Durchbrechungen eingreifenden Abschnitte davon bis in die unmittelbare Nähe des Außenumfang des Adapters reichen. Somit verbleibt lediglich ein schmaler Spalt zwischen dem Ferritelement und dem gehalterten Adapter, wodurch auch der von der Haltevorrichtung umschlossene Bereich des Adapters einem hohen Magnetfluss zu seiner Erhitzung ausgesetzt ist. Diese Weiterbildung der Erfindung ist vor allem dann von Vorteil, wenn der Adapter eher kurz ausgeführt ist und sich das Werkzeug in eingesetztem Zustand nahezu bis zum unteren Ende des Adapters erstreckt. In diesem Fall ist es wichtig, den Adapter über beinahe seine gesamte Länge in einem Maß zu erwärmen, dass ein einfaches Einführen des Werkzeugs in diesen gestattet wird.

Da es gewünscht sein kann, verschiedene Typen von Adaptern in einer einzelnen erfindungsgemäßen Vorrichtung einem Schrumpfprozess unterziehen zu können, kann es bei der jeweiligen korrekten Positionierung des Heizteils bezüglich dem Adapter vorteilhaft sein, wenn das Heizteil ferner einen Anschlagsabschnitt umfasst, welcher dazu eingerichtet ist, während eines Verlagerns des Heizteils gegenüber dem Basisteil bei einer vorbestimmten Relativposition des Heizteils und des Basisteils mit dem gehalterten Adapter zur Anlage zu kommen. Insbesondere kann es sich hierbei um eine Positionierung handeln, in der der Adapter dem elektromagnetischen Wechselfeld der wenigstens einen Induktionsspule in optimaler Weise ausgesetzt ist, um eine höchstmögliche Effizienz des Schrumpfprozesses zu erreichen. Da auf diese Weise die Position des Heizteils gegenüber dem Basisteil durch die Anlage des Anschlagsabschnitts des Heizteils an dem Adapter festgelegt wird, kann durch geeignete Positionierung des Anschlagsabschnitts an dem Heizteil sichergestellt werden, dass sich die Induktionsspulen nach der Verlagerung des Heizteils gegenüber dem Basisteil stets in einer Position befinden, in der auch verschieden ausgebildete gebildete Adapter mit unterschiedlichen Längen in optimaler Weise ihrem Wechselfeld ausgesetzt werden können.

Um diese optimale Position, sobald sie einmal mithilfe des Anschlagsabschnitts festgelegt worden ist, wiederholt schnell einnehmen zu können, kann dem Basisteil ferner eine Positionierungseinrichtung zugeordnet sein, welche dazu eingerichtet ist, sich beim Verlagern des Heizteils gegenüber dem Basisteil relativ zu der Haltevorrichtung zu bewegen, bezüglich dem Basisteil arretierbar zu sein und in arretiertem Zustand eine Anlage für das Heizteil in der entsprechenden Relativposition zu dem Basisteil darzustellen. Somit kann im Betrieb der erfindungsgemäßen Vorrichtung für einen Schrumpfprozess eines Adapters zunächst einmal das Heizteil mithilfe des Anschlagsabschnitts in eine optimale Position verlagert werden, wobei sie die Positionierungseinrichtung gegenüber dem Basisteil bewegt, bei Erreichen dieser Position kann die Positionierungseinrichtung arretiert werden, das Heizteil kann erneut entfernt werden, beispielsweise um einen zweiten baugleichen Adapter in die Haltevorrichtung einzusetzen, und dann kann das Heizteil zurück in die entsprechende Position verlagert werden, wo es erneut mit der Positionierungseinrichtung zur Anlage kommt. Das zusätzliche Vorsehen der Positionierungseinheit ist beispielsweise dann von Vorteil, wenn der Anschlagsabschnitt des Heizteils bei dessen Betrieb zu entfernen ist, so dass er im genannten Beispiel von zwei Schrumpfprozessen von zwei gleich ausgebildeten Adaptern zwischen diesen beiden Prozessen nicht erneut an dem Heizteil angebracht werden muss.

In einer Weiterbildung kann die erfindungsgemäße Vorrichtung ferner ein Kühlteil umfassen, welches dazu eingerichtet ist, den in dem Basisteil angeordneten Adapter zu kühlen und in der Einführrichtung des Werkzeugs gegen das Basisteil verlagerbar zu sein. Somit kann nach einem Schrumpfprozess und einem Einsetzen des Werkzeugs in den Adapter das Heizteil von dem Basisteil entfernt werden und durch das Kühlteil ersetzt werden, welches für eine beschleunigte Abkühlung des Adapters sorgt, damit dieser rasch in der Werkzeugmaschine eingesetzt werden kann, für die er vorgesehen ist. Durch das zusätzliche Vorsehen eines Kühlteils werden somit die für den gesamten Prozess des Einsetzens eines Werkzeugs in einen Adapter benötigten Taktzeiten verringert.

In einem zweiten Aspekt betrifft die vorliegende Erfindung ein System nach Anspruch 6, gebildet aus einer erfindungsgemäßen Vorrichtung zum Erhitzen von Adaptern zum Halten von Werkzeugen für den Einsatz in Werkzeugmaschinen und einen derartigen Adapter zum Halten von Werkzeugen für den Einsatz in Werkzeugmaschinen, wobei sich das Werkzeug in gehaltenem Zustand an einer Seite aus dem Adapter erstreckt, wobei der Adapter vorzugsweise die Außenabmessungen einer Spannzange aufweist.

Das halternde Zusammenwirken zwischen Adapter und Haltevorrichtung erfolgt mittels zusammenwirkender Gewindeabschnitte.

Hierbei weisen der Adapter und die Haltevorrichtung im Bereich des formschlüssigen Zusammenwirkens komplementäre Abmessungen in Form eines Innen- bzw. Außenkegels auf, beispielsweise in Form eines Innen- bzw. Außenkegelstumpfs. Es könnte insbesondere an eine Ausführungsform gedacht werden, in der der Adapter an seinem in die Haltevorrichtung einzusetzenden Ende ein Außengewinde, das bevorzugt mehrgängig, insbesondere zweigängig ausgeführt ist, in einem kegelstumpfförmig zulaufenden Endabschnitt aufweist und die Haltevorrichtung eine ebenfalls kegelstumpfförmig zulaufende Öffnung mit einem ebenen Boden aufweist, an deren Innenwand wenigstens ein Sperrelement ausgebildet ist, das mit dem Außengewinde des Adapters in Eingriff gebracht werden kann.

Durch die kegelstumpfförmige Ausführung des Endabschnitts des Adapters und eine groß gewählte Steigung des Gewindes kann dann der Adapter mit einer sehr kurzen Schraubbewegung, beispielsweise kleiner als eine halbe oder gar eine viertel Umdrehung in die Haltevorrichtung eingeschraubt und damit an ihr befestigt werden. Auf diese Weise kann der Adapter wiederholgenau an der Haltevorrichtung montiert werden, und indem der Adapter am Boden der kegelstumpfförmigen Öffnung am Ende der Schraubbewegung angedrückt wird, wird eine hochpräzise wiederholbare Positionierung in axialer Richtung erreicht, die ebenfalls eine Längeneinstellung des Werkzeugs erlaubt. Hierbei kann durch geeignete Ausbildung der Haltevorrichtung und des Adapters eine Toleranz erreicht werden, die weniger als 0,01 mm oder gar 0,005 mm beträgt. Hierzu kann der Adapter zusätzlich eine plangeschliffene Auflagefläche an seiner Unterseite umfassen, die sich in axialer Richtung einer hinreichend genau definierten Position zu einem Bezugsdurchmesser an seiner kegelstumpfförmigen Außenseite befindet. Wenn nun ein Werkzeug mit einer bestimmten Auskraglänge aus dem Adapter heraus oder mit einer bestimmten Länge relativ zu einer Bezugsfläche an dem Adapter an der erfindungsgemäßen Vorrichtung in den Adapter eingeschrumpft wird, kann damit die Gesamtlänge der durch Kombination aus Adapter und Werkzeug in einer Aufnahme gebildete Baugruppe präzise vorherbestimmt werden.

Wie bereits weiter oben angesprochen, erlaubt die erfindungsgemäße Abstimmung der Vorrichtung zum Erhitzen des Adapters und des Adapters selbst eine wesentlich höhere Flexibilität bei der Formgebung des Adapters, da dieser wesentlich selektiver aufgeheizt werden kann und somit auch dünnwandige Bereiche vorgesehen werden können, ohne dass in Schrumpfprozessen eine Beschädigung des Adapters zu befürchten ist. Hierbei kann es insbesondere vorteilhaft sein, wenn der Adapter einen dünnwandigen Abschnitt umfasst, welcher über einen außen konischen Bereich des Adapters herausragt und um das sich aus dem Adapter erstreckende Werkzeug anliegt. Auf diese Weise wird die mit dem Werkzeug in Kontakt stehende Länge des Adapters vergrößert, so dass das Werkzeug als Ganzes fester und präziser an dem Adapter gehalten werden kann, sowohl in radialer als auch in axialer Richtung. In einer Variante kann der dünnwandige Abschnitt soweit über den außen konischen Bereich des Adapters herausragen, dass sich das Werkzeug in eingesetztem Zustand lediglich im Bereich des dünnwandigen Abschnitts befindet und nicht mehr in den außen konischen Bereich des Adapters hineinragt.

In einer Weiterbildung kann das erfindungsgemäße System eine Mehrzahl von Adaptern umfassen, welche gleiche Elemente für das formschlüssige Zusammenwirken mit der Haltevorrichtung aufweisen und sich in ihren Außenabmessungen unterscheiden. Auf diese Weise können in einer einzelnen Vorrichtung zum Erhitzen verschiedene Typen von Adaptern Schrumpfprozessen unterzogen werden, was die Flexibilität des gesamten Systems noch einmal deutlich erhöht. Hierbei ist lediglich darauf zu achten, dass sämtliche der Adapter in geeigneter Weise von der Haltevorrichtung der Vorrichtung gehaltert werden können.

In einer weiteren Weiterbildung kann das erfindungsgemäße System zudem ein Spannzangenfutter zur Verwendung in einer Werkzeugmaschine umfassen, welches dazu eingerichtet ist, den oder einen der Adapter aufzunehmen, und gegebenenfalls derart gebildet ist, dass der dünnwandige Abschnitt des Adapters in dessen aufgenommenem Zustand das Spannzangenfutter in axialer Richtung überragt.

Ferner kann das Spannzangenfutter dazu eingerichtet sein, wahlweise wenigstens einen der Adapter oder eine Spannzange aufzunehmen.

Weiterhin betrifft die vorliegende Erfindung gemäß Anspruch 15 einen Adapter für ein erfindungsgemäßes System, welcher eine abschnittsweise zylindrische Außenkontur aufweist, welche in axialer Richtung zwischen einem ersten und einem zweiten Abschnitt mit jeweils konischer Außenkontur vorgesehen ist. Dieser Adapter kann hierbei derart gebildet sein, dass die abschnittsweise zylindrische Außenkontur einen Außendurchmesser aufweist, welcher größer als derjenige des ersten Abschnitts mit konischer Außenkontur und kleiner als derjenige des zweiten Abschnitts mit konischer Außenkontur.

Alternativ oder zusätzlich kann der Adapter ein Außengewinde aufweisen, vorzugsweise ein mehrgängiges Außengewinde aufweisen, welches in einem ersten Abschnitt mit konischer Außenkontur ausgebildet sein kann. Hierbei kann zwischen den Gewindegängen in dem ersten Abschnitt mit konischer Außenkontur eine Anlagefläche ausgebildet sein, welche breiter ist als die halbe Nutbreite eines Gewindegangs. Ferner kann der erfindungsgemäße Adapter frei von axialen Schlitzungen sein.

In einer Weiterbildung kann der Adapter wenigstens eine, vorzugsweise vier, zu dem Werkzeug hin offene Nut bzw. Nuten und/oder wenigstens einen Kanal zum Führen von Kühlmittel aufweisen. Die wenigstens eine Nut und/oder der wenigstens eine Kanal können hierbei in im Wesentlichen axialer Richtung verlaufen, so dass sie das Kühlmittel von hinter dem Werkzeug erhalten und um das Werkzeug herum führen können. In diesem Zusammenhang bezeichnet ein Kanal einen vollständig von dem Körper des Adapters umschlossenen Weg für Kühlmittel, während eine Nut zu dem Werkzeug hin offen ist.

Des Weiteren betrifft die vorliegende Erfindung die Verwendung eines Systems gemäß Anspruch 14 zum Einführen eines Werkzeugs in einen Adapter beziehungsweise zum Entnehmen eines Werkzeugs aus einem Adapter eines erfindungsgemäßen Systems, umfassend die Schritte:
- Haltern des Adapters in der Haltevorrichtung;
- Verlagern des Heizteils gegenüber dem Basisteil, bis der Adapter sich in einem Heizbereich des Heizteils befindet, beispielsweise in einem Feldbereich der wenigstens einen Induktionsspule des Heizteils;
- Betreiben des Heizteils, um den Adapter aufzuheizen und aufzuweiten,
- Einführen des Werkzeugs in den Adapter beziehungsweise Entnehmen des Werkzeugs aus dem Adapter,
- gegebenenfalls Abkühlen des Adapters, so dass der Adapter schrumpft und das Werkzeug fest umschließt, und
- Entnehmen des Adapters aus der Haltevorrichtung.

Hierbei können die beiden letzten Schritte des Abkühlens und des Entnehmens des Adapters auch in umgekehrter Reihenfolge vorgesehen werden, so dass die Haltevorrichtung sofort für ein Haltern eines weiteren Adapters zur Verfügung steht.

Zuletzt sei noch darauf hingewiesen, dass für das Basisteil zur Verwendung in einer erfindungsgemäßen Vorrichtung auch separat Schutz angestrebt wird.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Figur 1:: eine schematische Querschnittsansicht einer erfindungsgemäßen Vorrichtung;
- Figur 2:: eine vergrößerte Querschnittsansicht des Basisteils der Vorrichtung aus Figur 1;
- Figur 3a:: eine erste Bauform eines erfindungsgemäßen Adapters in Seitenansicht;
- Figuren 3b und 3c:: eine zweite Bauformen eines erfindungsgemäßen Adapters in Seitenansicht und schräger Draufsicht;
- Figur 3d:: eine dritte Bauform eines erfindungsgemäßen Adapters; und
- Figur 4:: eine abgewandelte Variante der Vorrichtung aus Figur 1.

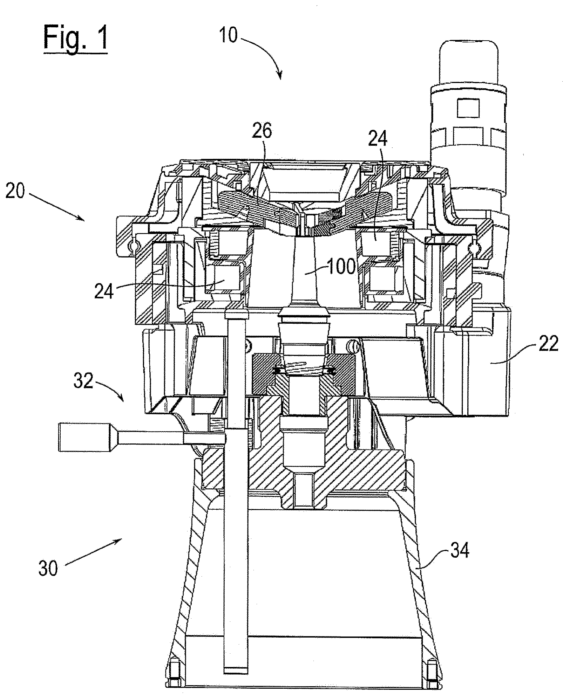

In Figur 1 ist eine erfindungsgemäße Vorrichtung zum Erhitzen von Adaptern zum Halten von Werkzeugen für den Einsatz in Werkzeugmaschinen in einer schematischen Querschnittsansicht gezeigt und ganz allgemein mit dem Bezugszeichen 10 bezeichnet. Die Vorrichtung 10 umfasst zwei wesentliche Teile, nämlich das in Figur 1 oben dargestellte Heizteil 20 und das unten dargestellte Basisteil 30. Ferner ist in Figur 1 ein an dem Basisteil gehalterter Adapter 100 zu erkennen, der sich von dem Basisteil 30 nach oben in das Heizteil 20 hinein erstreckt.

Das Heizteil 20 und das Basisteil 30 sind gegeneinander verlagerbar, insbesondere entlang der Richtung, die durch die Erstreckung des Adapters 100 entlang seiner weiter unten beschriebenen axialen Richtung festgelegt ist und entlang derer ebenfalls ein nicht in den Figuren dargestelltes Werkzeug in den Adapter einführbar ist. Hierzu kann das Heizteil 20 beispielsweise verlagerbar an einem Gestell befestigt sein, gegenüber dem das Basisteil 30 fest angeordnet ist.

Das Heizteil 20 umfasst hierzu ein Gehäuse 22, in dem ein Paar von Induktionsspulen 24 angeordnet sind, die in Hohlräumen in dem Gehäuse 22 getragen sind. Die Achsen dieser Induktionsspulen 24 erstrecken sich ebenfalls in der Darstellung aus Figur 1 in vertikaler Richtung, so dass die Achsen der Induktionsspulen 24 parallel zur Achse des Adapters 100 verlaufen. Die Induktionsspulen werden durch nicht gezeigte elektrische Zuleitungen mit Strom versorgt und derart betrieben, dass durch die von ihnen erzeugten Wechselfelder Ströme in dem Adapter 100 induziert werden.

Ferner umfasst das Heizteil 20 ein Anschlagselement 26, das in der Figur 1 gezeigten Stellung mit der Oberseite des Adapters 100 in Kontakt steht. Dieses Anschlagselement 26 sorgt bei einer vertikalen Verlagerung des Heizteils 20 nach unten auf das Basisteil 30 zu dafür, dass diese Verlagerung bei einer geeigneten relativen Positionierung des Heizteils 20 gegenüber dem Adapter 100 und damit dem Basisteil 30 endet. In dieser in Figur 1 gezeigten geeigneten Positionierung sind die Induktionsspulen 24 derart bezüglich des Adapters 100 positioniert, dass bei ihrem Betrieb mit Wechselstrom in dem Adapter 100 durch elektromagnetische Wechselwirkung ebenfalls Ströme induziert werden, die den Adapter 100 dann aufgrund dessen Ohm'schen Widerstands aufheizen. Aufgrund der so hervorgerufenen thermischen Ausdehnung weitet sich der Adapter 100 dann auf, so dass letzten Endes das vorgesehene Werkzeug in ihn eingeführt werden kann.

Bei dem gezeigten Anschlagselement 26 handelt es sich um ein Bauteil, das auch beim induktiven Heizen von größeren Komponenten als dem Adapter 100 mit dem hier dargestellten Heizteil 20 eingesetzt werden könnte, wobei es in solchen Fällen in erster Linie dazu verwendet werden würde, das magnetische Feld an der Stirnseite der entsprechenden Komponente zu konzentrieren. Eine derartige Konzentration ist allerdings beim vorliegenden Adapter 100 aufgrund dessen Dünnwandigkeit nicht erwünscht, da zu hohe magnetische Feldstärken zu einer Beschädigung des Adapters 100 führen könnten. Dementsprechend wird das Anschlagselement 26 vor dem Betrieb der Induktionsspulen 24 aus dem Heizteil 20 entfernt oder innerhalb des Heizteils 20 in eine Position gebracht, in der es keine Wirkung mehr auf den Adapter 100 entfalten kann.

Um bei einem erneuten Verlagern des Heizteils 20 gegenüber dem Basisteil 30 bei Verwendung desselben oder eines baugleichen Adapters 100 das Anschlagselement 26 nicht erneut an den Adapter 100 annähern zu müssen, umfasst das Basisteil 30 eine Positioniereinrichtung 32.

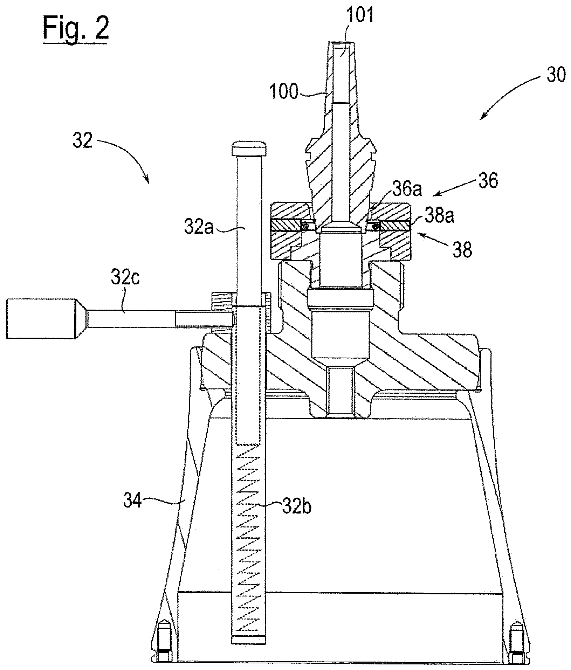

Diese Positioniereinrichtung 32 ist insbesondere in der vergrößerten Ansicht des Basisteils 30 in Figur 2 gut zu erkennen. Sie umfasst eine teleskopartig ausfahrbare Rohranordnung 32a mit einem festen äußeren und einem verlagerbaren inneren Rohr, welches durch eine in dem äußeren Rohr aufgenommene Feder 32b in Richtung vertikal nach oben vorgespannt ist.

Beim Aufsetzen des Heizteils 20 auf das Basisteil 30 kommt ein Abschnitt des Gehäuses 22 des Heizteils 20 mit dem inneren Rohr in Kontakt, so dass die Rohranordnung 32a gegen die Wirkung der Feder 32b zusammengeschoben wird, wobei beim Erreichen einer geeigneten Relativposition zwischen dem Heizteil 20 und dem Basisteil 30, wie beispielsweise der in Figur 1 gezeigten, dann die Positionierungseinrichtung mittels eines Hebel 32c in dieser Position festgesetzt werden kann. Somit kann auch nach einem Entfernen des Anschlagselements 26 von dem Heizteil 20 erneut die mithilfe dieses Anlageelements 26 aufgefundene optimale Stellung wieder eingenommen werden, indem das Heizteil 20 soweit gegenüber dem Basisteil 30 abgesenkt wird, bis das Gehäuse 22 des Heizteils 20 wieder auf der Positionierungseinrichtung 32 zum Aufliegen kommt.

Weiterhin umfasst das Basisteil 30 einen Sockel 34, auf dem eine Haltevorrichtung 36 angeordnet ist. Diese Haltevorrichtung 36 besteht im Wesentlichen aus einer kegelstumpfförmigen Aufnahme 36a mit einem ebenen Boden, die mit geeigneten Eingriffselementen, beispielsweise einem Innengewinde oder dieselbe Funktion erfüllende Vorspünge, versehen ist, durch die der Adapter 100 mit seinem später beschriebenen Außengewinde 102 eingeschraubt werden kann. Die Haltevorrichtung 36 umschließt den Adapter 100 an dessen unterem Abschnitt 104 vollumfänglich und wirkt deshalb abschirmend gegenüber dem von den Spulen 24 erzeugten Magnetfeld, wodurch ein Aufheizen des in der Haltevorrichtung aufgenommenen Abschnitts des Adapters 100 zunächst einmal gehemmt wird. Um diese Abschirmwirkung auszugleichen, sind in der Haltevorrichtung 36 Durchbrechungen 38 vorgesehen, durch die hindurch sich Ferritelemente 38a in Richtung des Adapters 100 von außen nach innen erstrecken. Diese Ferritelemente 38a leiten und konzentrieren das externe magnetische Feld durch die Haltevorrichtung 26 hindurch bis zu dem Adapter 100, so dass dieser auch in seinem unteren Abschnitt 104 aufgeheizt und aufgeweitet wird.

Ist eine ausreichende Aufheizung und damit Aufweitung des Adapters 100 vorgenommen worden, dann kann von oben her ein vorgesehenes Werkzeug mit geeigneten Abmessungen in den nur hier gezeigten Innenraum 101 des Werkzeugs 100 eingeführt werden, wo es nach einem erneuten Abkühlen des Adapters eingeklemmt bleibt.

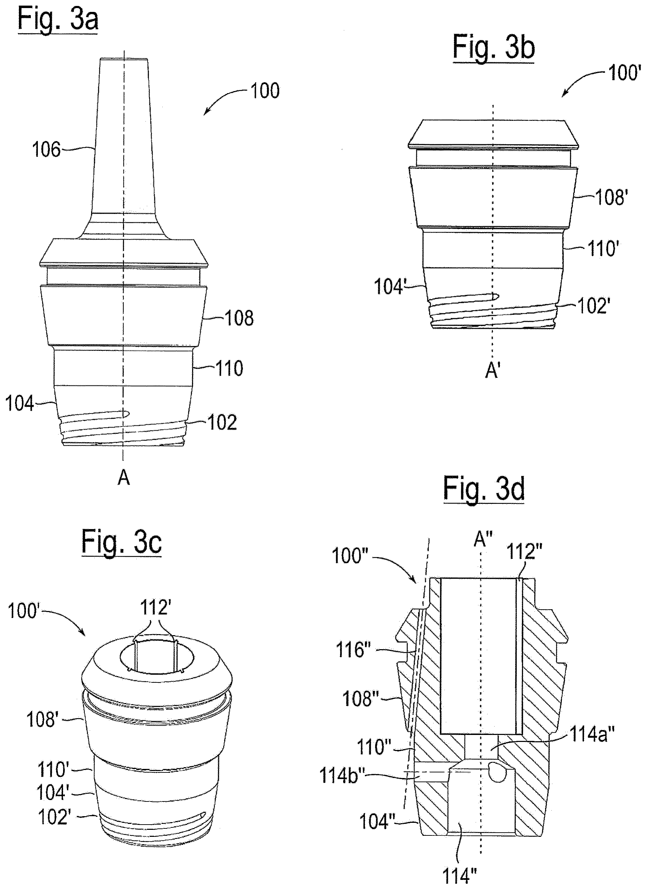

Des Weiteren seien unter Bezugnahme auf die Figuren 3a bis 3d drei Ausführungsformen von Adaptern beschrieben, die in der Vorrichtung 10 aus der Figur 1 einem Schrumpfprozess unterzogen werden können. Hierbei sind in den Figuren 3a und 3b die erste und die zweite Ausführungsform jeweils in Seitenansicht gezeigt, in der Figur 3c ist die zweite Ausführungsform in einer schrägen Draufsicht gezeigt und in der Figur 3d ist die dritte Ausführungsform in einer Querschnittsansicht gezeigt.

Zunächst einmal ist in Figur 3a der Adapter 100 aus den Figuren 1 und 2 erneut dargestellt. Der Adapter 100 weist hierbei eine Achse A auf, entlang derer das angesprochene Werkzeug in ihn einsetzbar ist und bezüglich derer er im Wesentlichen rotationssymmetrisch ist.

Lediglich an seiner in den Figuren 1 und 2 unten dargestellten Seite, d. h. an der dem Werkzeugaustritt abgewandten Seite, ist diese Symmetrie durch das Vorsehen des bereits erwähnten Außengewindes 102 in der Außenwand des Adapters 100 durchbrochen. Wie oben erklärt, kann mithilfe des Außengewindes 102 der Adapter 100 in die Haltevorrichtung 36 des Basisteils 30 eingeschraubt werden, wobei durch die Kegelstumpfform des entsprechenden unteren Abschnitts 104 des Adapters 100 und die komplementäre Form der Aufnahme 36a sowie die hohe Steigung des Gewindes 102 eine hochpräzise Positionierung des Adapters 100 in der Haltevorrichtung 36 erreicht werden kann.

Der Adapter 100 weist des Weiteren eine Außenform auf, die seinen Einsatz in üblichen Spannzangenfuttern ermöglicht, insbesondere ist er über einen Großteil seiner Erstreckung entlang seiner Achse A ebenfalls kegelstumpfförmig geformt, so dass er mittels einer Überwurfmutter in ein Spannzangenfutter eingeschraubt werden kann. Lediglich an seiner dem Werkzeugaustritt zugewandten Oberseite weist der Adapter 100 einen dünnwandigen Erstreckungsabschnitt 106 auf, der sich eng um das in dem Adapter 100 aufgenommene Werkzeug anschließt. Hierdurch wird, verglichen mit üblichen Spannfuttern und bekannten Adaptern, ein festerer Halt des Werkzeugs in dem Adapter 100 sowohl in radialer als auch axialer Richtung erreicht, wodurch die Präzision der aus dem Adapter 100 und dem nicht gezeigten Werkzeug gebildeten Baugruppe weiter erhöht wird. In einer Variante kann der Erstreckungsabschnitt 106 aber auch so lang sein, dass das Werkzeug lediglich innerhalb des Erstreckungsabschnitts 106 gehalten wird und nicht mehr in den kegelstumpfförmigen Abschnitt 104 des Adapters 100 hineinragt.

Dass auf diesen Abschnitt 106 in erfindungsgemäßen Adaptern allerdings auch verzichtet werden kann, zeigt die in den Figuren 3b und 3c gezeigte Variante 100' eines Adapters, die einen derartigen Abschnitt nicht aufweist, wobei der Adapter 100' ansonsten in seiner äußeren Form identisch zu dem Adapter 100 aus der Figur 3a ist. Insbesondere ist sowohl der kegelstumpfförmige Abschnitt 104' mit denselben Außenabmessungen gebildet und das Außengewinde 102' mit derselben Steigung, wie dies in dem Adapter 100 aus der Figur 3a der Fall ist. Indem diese Parameter bei verschieden geformten Adaptern 100 und 100' gleich gewählt sind, können diese jeweils in gleicher Weise in die Haltevorrichtung 36 der Vorrichtung 10 aus den Figuren 1 und 2 einschraubt werden und dort einem Schrumpfprozess unterzogen werden.

Des Weiteren sei noch darauf hingewiesen, dass beide Ausführungsformen eines erfindungsgemäßen Adapters 100 und 100' eine abschnittsweise zylindrische Außenkontur 110 bzw. 110' aufweisen, welche in axialer Richtung zwischen dem kegelstumpfförmigen Abschnitt 104 bzw. 104' und einem weiteren kegelstumpfförmigen Abschnitt 108 bzw. 108' vorgesehen ist. Hierbei weist die zylindrische Außenkontur 110 bzw. 110' jeweils einen Außendurchmesser auf, welcher größer als derjenige des kegelstumpfförmigen Abschnitts 104 bzw. 104' und kleiner als derjenige des weiteren kegelstumpfförmigen Abschnitts 108 bzw. 108' ist.

Ein weiterer Unterschied zwischen den Ausführungsformen 100 und 100' aus den Figuren 3a bzw. 3b und 3c besteht darin, dass die Ausführungsform 100' an ihrer dem Werkzeug zugewandten Innenseite vier um jeweils 90° beabstandete Nuten 112' aufweist, die zu dem Werkzeug hin offen sind und durch die somit an dem Werkzeug entlang Kühlmittel geführt werden kann. Indem dieses Kühlmittel von der Unterseite in den Figuren 3b und 3c, d.h. der Seite einer Spindel in einer Werkzeugmaschine, her eingegeben wird, kann hierdurch sowohl der Adapter 100' als auch insbesondere das Werkzeug gekühlt werden und es kann Kühlmittel in den Bereich der Bearbeitung eines Objekts durch das Werkzeug transportiert werden.

Diese Zufuhr von Kühlmittel lässt sich insbesondere unter Bezugnahme auf die dritte Ausführungsform eines erfindungsgemäßen Adapters 100" aus Figur 3d nachvollziehen, in dem neben der bereits angesprochenen wenigstens einen Nut 112" ferner ein Kanal 116" vorgesehen ist, der sich unter einem Winkel zu der Achse A" durch den Körper des Adapters erstreckt. Ansonsten entspricht die dritte Ausführungsform 110" insbesondere hinsichtlich ihrer Außenabmessungen der zweiten Ausführungsform 110' und weist wie diese zwei kegelstumpfförmige Abschnitte 104" und 108" sowie einen dazwischen angeordneten zylinderförmigen Abschnitt 110" auf. Es sei lediglich darauf hingewiesen, dass der Adapter 100" in seinem ersten kegelstumpfförmigen Abschnitt 104" aus Gründen der Übersichtlichkeit ohne Außengewinde dargestellt ist, dieses jedoch ebenfalls vorgesehen sein kann.

Wie bereits angesprochen wird durch einen Zugang 114" im in Figur 3d unteren Teil des Adapters 110" Kühlmittel eingegeben, das dann einerseits durch den ersten Strömungsweg 114a" zu der Nut 112" und in dieser an dem Werkzeug entlang strömt und andererseits durch den zweiten Strömungsweg 114b" und an der Außenseite des zylindrischen Abschnitts 110" entlang in den Kanal 116" strömt, um schließlich von radial außen her ebenfalls auf das Werkzeug zuzuströmen. Hierbei sei daran erinnert, dass der Adapter 100" im Betrieb in einem Futter aufgenommen ist, das sich radial außerhalb des zylindrischen Abschnitts 110" befindet und zusammen mit diesem zwischen dem zweiten Strömungsweg 114b" und dem Kanal 116" das Kühlmittel führt.

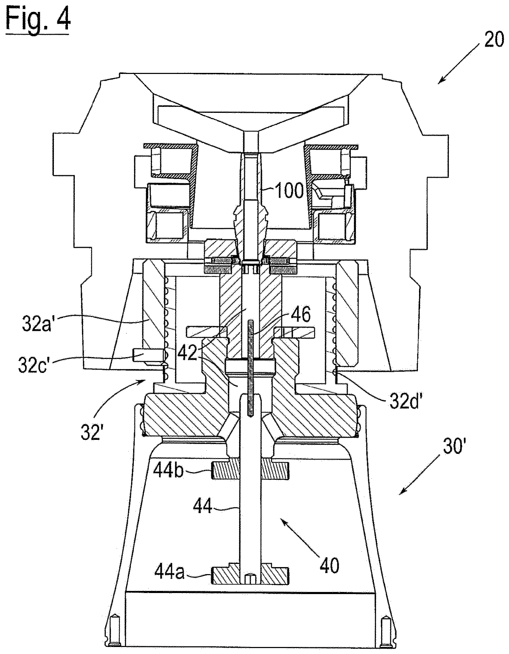

Zuletzt ist in der Figur 4 eine abgewandelte Variante der Vorrichtung aus Figur 1 gezeigt, die sich von dieser einerseits durch die Gestaltung ihrer Positionierungseinrichtung unterscheidet, die hier mit dem Bezugszeichen 32' bezeichnet ist, sowie durch das Vorsehen einer Längeneinstellungsanordnung 40 für das in den Adapter einzusetzende Werkzeug. Es sei darauf hingewiesen, dass diese Längeneinstellungsanordnung 40 prinzipiell auch mit dem Basisteil 30 aus den Figuren 1 und 2 kombinierbar ist und dass in der Variante aus Figur 4 das Heizteil 20 und die Haltevorrichtung 36 aus den Figuren 1 und 2 zum Einsatz kommen.

Aus Gründen der Übersichtlichkeit sei daher auf eine erneute Beschreibung dieses Heizteils 20 und dieser Haltevorrichtung 36 sowie weiterer Komponenten verzichtet, die sich in gleicher oder ähnlicher Form auch in der Vorrichtung aus Figur 1 finden, und es sei auf die entsprechenden Textstellen weiter oben verwiesen, in denen diese Komponenten beschrieben sind.

Die Positionierungseinrichtung 32' umfasst ein ringförmiges Element 32a', das sich um einen oberen Bereich des Basisteils 30' herum erstreckt und in ähnlicher Weise wie die Rohranordnung 32a der Positionierungseinrichtung 32 aus Figur 1 und 2 als höhenverstellbare Anlage für das Heizteil 20 dient. Das ringförmige Element 32a' kann ebenfalls durch die Wirkung des auf das Basisteil 30' zubewegten Heizteils 20 oder auch manuell gegenüber dem Basisteil 30' in Richtung der Achse des Adapters 100 verlagert werden. Zum Festsetzen des ringförmigen Elements 32a' in einer Position, die einer für den momentan in dem Basisteil 30' gehalterten Adapter 100 geeigneten Lage des Heizteils 20 entspricht, ist ferner ein Bolzen 32c' vorgesehen, der in eine Bohrung in dem ringförmigen Element 32a' einführbar ist und an der axialen Innenseite des ringförmigen Elements 32a' mit einer aus einer Reihe von Nuten 32d' an dem Basisteil 30' in Eingriff tritt. Indem sich der Bolzen 32c' zwischen dem ringförmigen Element 32a' und der entsprechenden Nut 32d' verkeilt, wird das ringförmige Element in seiner momentanen Raum- und Winkelposition festgesetzt und kann als Anlage für das Heizteil 20 dienen.

Zuletzt sei noch die Längeneinstellungsanordnung 40 für das in den Adapter einzusetzende Werkzeug erklärt. Diese umfasst einen hohlen Abschnitt 42, der in der Verlängerung der Achse des Adapters 100 nach unten liegt und sich bis zu der unteren Öffnung des Adapters 100 erstreckt. In dem hohlen Abschnitt ist ein Rohr 44 verlagerbar geführt, das an seinem unteren Ende einen Betätigungsabschnitt 44a zur Verlagerung des Rohrs 44 in dem hohlen Abschnitt 42 umfasst. Weiterhin ist an dem Basisteil 30' ein Anschlag 44b vorgesehen, der die Verlagerung des Rohrs 44 in dem hohlen Abschnitt 42 begrenzt.

Am oberen Ende des Rohrs 44 ist ferner ein Stab 46 gehaltert, der einen verringerten Durchmesser aufweist, insbesondere einen Durchmesser, der kleiner ist als der Innendurchmesser des Adapters 100 in geschrumpftem Zustand, oder anders ausgedrückt kleiner als der Durchmesser des in dem Adapter 100 aufzunehmenden Werkzeugs. Bei einer Verlagerung des Rohrs 44 nach oben wird sich der Stab 46 ab einem gewissen Zeitpunkt teilweise innerhalb des Adapters befinden. Dort wirkt er folglich als Höhenanlage für ein von oben her in den Adapter 100 einzuführendes Werkzeug, wobei sein Durchmesser wie angesprochen so klein ist, dass er auch nach dem Einschrumpfen des Werkzeugs in den Adapter 100 wieder problemlos nach unten aus dem Innenraum des Adapters 100 entnommen werden kann. Indem somit der Stab 46 in einem vorbestimmten Maß vor dem Einführen und Einschrumpfen des Werkzeugs von unten in den Adapter eingeführt wird, kann die Lage des Werkzeugs und somit sein Überstand nach oben aus dem Adapter 100 heraus sehr genau eingestellt werden.

## Patentansprüche

1. Vorrichtung zum Erhitzen von Adaptern (100, 100', 100") zum Halten von einem Werkzeug für den Einsatz in Werkzeugmaschinen, umfassend:
- ein Basisteil (30, 30'), in welchem ein Adapter (100, 100', 100") zum Einführen oder Entnehmen des Werkzeugs derart anordenbar ist, dass sich die Einführrichtung des Werkzeugs auf das Basisteil (30, 30') zu erstreckt; und
- ein Heizteil (20), welches dazu eingerichtet ist, den in dem Basisteil (30, 30') angeordneten Adapter (100, 100', 100") zu erhitzen;
wobei das Basisteil (30, 30') und das Heizteil (20) in der Einführrichtung des Werkzeugs gegeneinander verlagerbar sind; und
das Basisteil (30, 30') eine Haltevorrichtung (36) umfasst, welche dazu eingerichtet ist, den Adapter (100, 100', 100") während des Erhitzens ortsfest an dem Basisteil zu haltern,
**dadurch gekennzeichnet, dass**
ein Innenkegel der Haltevorrichtung (36) mit einem Innengewinde für ein formschlüssiges Zusammenwirken zum Haltern des Adapters (100, 100', 100") an dem Basisteil versehen ist.

2. Vorrichtung nach Anspruch 1, **dadurch gekennzeichnet, dass** das Heizteil (20) wenigstens eine Induktionsspule (24) umfasst, welche dazu eingerichtet ist, den in dem Basisteil (30, 30') angeordneten Adapter (100, 100', 100") durch elektromagnetische Induktion zu erhitzen und/oder
die Haltevorrichtung (36) aus elektrisch und/oder magnetisch schwach oder nicht leitendem Material gebildet ist.

3. Vorrichtung nach Anspruch 1 oder 2, **dadurch gekennzeichnet, dass** die Haltevorrichtung (36) dazu eingerichtet ist, beim Haltern des Adapters (100, 100', 100") diesen abschnittsweise vollumfänglich zu umschließen , wobei vorzugsweise die Haltevorrichtung (36) im Abschnitt der vollumfänglichen Umschließung des Adapters (100, 100', 100") eine oder mehrere Durchbrechungen (38) aufweist, in welchen sich magnetisierbare Elemente (38a) in Richtung des gehalterten Adapters (100, 100', 100") erstrecken.

4. Vorrichtung nach einem der vorhergehenden Ansprüche, **dadurch gekennzeichnet, dass** das Heizteil (20) ferner einen Anschlagsabschnitt (26) umfasst, welcher dazu eingerichtet ist, während eines Verlagerns des Heizteils (20) gegenüber dem Basisteil (30, 30') bei in einer vorbestimmten Relativposition des Heizteils (20) und des Basisteils (30, 30') mit dem gehalterten Adapter (100, 100', 100") zur Anlage zu kommen, wobei vorzugsweise dem Basisteil (30) ferner eine Positionierungseinrichtung (32, 32') zugeordnet ist, welche dazu eingerichtet ist, sich beim Verlagern des Heizteils (20) gegenüber dem Basisteil (30, 30') relativ zu der Haltevorrichtung (36) zu bewegen, bezüglich dem Basisteil (30, 30') arretierbar zu sein und in arretiertem Zustand eine Anlage für das Heizteil (20) in der entsprechenden Relativposition zu dem Basisteil (30, 30') darzustellen.

5. Vorrichtung nach einem der vorhergehenden Ansprüche, **dadurch gekennzeichnet, dass** sie ferner ein Kühlteil umfasst, welches dazu eingerichtet ist, den in dem Basisteil (30, 30') angeordneten Adapter (100, 100', 100") zu kühlen und in der Einführrichtung des Werkzeugs gegen das Basisteil (30, 30') verlagerbar zu sein.

6. System, gebildet aus einer Vorrichtung nach einem der Ansprüche 1 bis 5 und einem Adapter (100, 100', 100") zum Halten von einem Werkzeug für den Einsatz in Werkzeugmaschinen, welches Werkzeug sich in gehaltenem Zustand an einer Seite aus dem Adapter (100, 100', 100") heraus erstreckt, wobei der Adapter (100, 100', 100") vorzugsweise die Außenabmessungen einer Spannzange aufweist.

7. System nach Anspruch 6, **dadurch gekennzeichnet, dass** der Adapter (100, 100', 100") und die Haltevorrichtung (36) mit zusammenwirkenden Gewindeabschnitten (102, 102') für ein formschlüssiges Zusammenwirken zum Haltern des Adapters (100, 100', 100") an dem Basisteil (30, 30') versehen sind, wobei der Adapter (100, 100', 100") und die Haltevorrichtung (36) im Bereich des formschlüssigen Zusammenwirkens komplementäre Abmessungen in Form eines Innen- bzw. Außenkegels (36a, 104, 104') aufweisen.

8. System nach Anspruch 6 oder 7, **dadurch gekennzeichnet, dass** der Adapter (100) einen dünnwandigen Abschnitt (106) umfasst, welcher um das Werkzeug anliegt, und/oder das System eine Mehrzahl von Adaptern (100, 100', 100") umfasst, welche gleiche Elemente (102, 102') für das formschlüssige Zusammenwirken mit der Haltevorrichtung (36) aufweisen und sich in ihren Außenabmessungen unterscheiden.

9. System nach einem der Ansprüche 6 bis 8, ferner umfassend ein Spannzangenfutter zur Verwendung in einer Werkzeugmaschine, welches dazu eingerichtet ist, den oder einen der Adapter (100) aufzunehmen, und gegebenenfalls derart gebildet ist, dass der dünnwandige Abschnitt (106) des Adapters (100) in dessen aufgenommenem Zustand das Spannzangenfutter in axialer Richtung überragt, wobei vorzugsweise das Spannzangenfutter ferner dazu eingerichtet ist, wahlweise wenigstens einen der Adapter (100, 100', 100") oder eine Spannzange aufzunehmen.

10. System nach einem der Ansprüche 6 bis 9, **dadurch gekennzeichnet, dass** der Adapter eine abschnittsweise zylindrische Außenkontur (110, 110', 110") aufweist, welche in axialer Richtung zwischen einem ersten und einem zweiten Abschnitt mit jeweils konischer Außenkontur (104, 108; 104', 108'; 104", 108") vorgesehen ist.

11. System nach Anspruch 10, **dadurch gekennzeichnet, dass** die abschnittsweise zylindrische Außenkontur (110, 110', 100") einen Außendurchmesser aufweist, welcher größer als derjenige des ersten Abschnitts mit konischer Außenkontur (104, 104', 104") und kleiner als derjenige des zweiten Abschnitts mit konischer Außenkontur (108, 108', 108") ist.

12. System nach einem der Ansprüche 6 bis 9, gegebenenfalls mit weiteren Merkmalen der Ansprüche 10 und 11,**dadurch gekennzeichnet, dass** der Adapter ein Außengewinde (102, 102') aufweist, wobei vorzugsweise er ein mehrgängiges Außengewinde (102, 102') aufweist und/ oder das Außengewinde in dem ersten Abschnitt mit konischer Außenkontur (104, 104') ausgebildet ist, beispielsweise zwischen den Gewindegängen in dem ersten Abschnitt mit konischer Außenkontur (104, 104') eine Anlagefläche ausgebildet ist, welche breiter als die halbe Nutbreite eines Gewindegangs ist.

13. System nach einem der Ansprüche 6 bis 12,
**dadurch gekennzeichnet, dass** der Adapter frei von axialen Schlitzungen ist und/oder dass er wenigstens eine, vorzugsweise vier, zu dem Werkzeug hin offene Nut bzw. Nuten (112', 112") und/oder wenigstens einen Kanal (116") zum Führen von Kühlmittel aufweist.

14. Verwendung eines Systems nach einem der Ansprüche 6 bis 13 zum Einführen eines Werkzeugs in einen Adapter (100, 100', 100") bzw. Entnehmen des Werkzeugs aus dem Adapter (100, 100', 100"), umfassend die Schritte:
- Haltern des Adapters (100, 100', 100") in der Haltevorrichtung (36) des Basisteils (30, 30') mittels formschlüssig zusammenwirkender Gewindeabschnitte (102, 102');
- Verlagern des Heizteils (20) gegenüber dem Basisteil (30, 30'), bis der Adapter (100, 100', 100") in einem Heizbereich des Heizteils (20) befindet;
- Betreiben des Heizteils, um den Adapter (100, 100', 100") aufzuheizen und aufzuweiten;
- Einführen eines Werkzeugs in den Adapter (100, 100', 100") bzw. Entnehmen des Werkzeugs aus dem Adapter (100, 100', 100");
- gegebenenfalls Abkühlen des Adapters (100, 100', 100"), so dass der Adapter (100, 100', 100") schrumpft und das Werkzeug fest umschließt; und
- Entnehmen des Adapters (100, 100', 100") aus der Haltevorrichtung (36).

15. Adapter (100, 100', 100") für ein System nach einem der Ansprüche 6 bis 9, **dadurch gekennzeichnet, dass** er eine abschnittsweise zylindrische Außenkontur (110, 110', 110") aufweist, welche in axialer Richtung zwischen einem ersten und einem zweiten Abschnitt mit jeweils konischer Außenkontur (104, 108; 104', 108'; 104", 108") vorgesehen ist und er mit formschlüssig zusammenwirkenden Gewindeabschnitten (102, 102') zum Haltern des Adapters (100, 100', 100") an dem Basisteil bereitgestellt ist.

16. Adapter (100, 100', 100") nach Anspruch 15, **dadurch gekennzeichnet, dass** die abschnittsweise zylindrische Außenkontur (110, 110', 100") einen Außendurchmesser aufweist, welcher größer als derjenige des ersten Abschnitts mit konischer Außenkontur (104, 104', 104") und kleiner als derjenige des zweiten Abschnitts mit konischer Außenkontur (108, 108', 108") ist.

17. Adapter (100, 100') für ein System nach einem der Ansprüche 6 bis 9, gegebenenfalls mit weiteren Merkmalen der Ansprüche 15 und 16 **dadurch gekennzeichnet, dass** er ein Außengewinde (102, 102') aufweist, wobei vorzugsweise
er ein mehrgängiges Außengewinde (102, 102') aufweist und/ oder das Außengewinde in dem ersten Abschnitt mit konischer Außenkontur (104, 104') ausgebildet ist, beispielsweise zwischen den Gewindegängen in dem ersten Abschnitt mit konischer Außenkontur (104, 104') eine Anlagefläche ausgebildet ist, welche breiter als die halbe Nutbreite eines Gewindegangs ist, und er mit Elementen für ein formschlüssiges Zusammenwirken zu dem Haltern des Adapters (100, 100', 100") an dem Basisteil bereitgestellt ist.

18. Adapter (100, 100', 100") nach einem der Ansprüche 15 bis 17,
**dadurch gekennzeichnet, dass** er frei von axialen Schlitzungen ist und/oder dass er wenigstens eine, vorzugsweise vier, zu dem Werkzeug hin offene Nut bzw. Nuten (112', 112") und/oder wenigstens einen Kanal (116") zum Führen von Kühlmittel aufweist.

## Claims

1. Device for heating adapters (100, 100', 100") for holding a tool for use in machine tools, comprising:
- a base part (30, 30') in which an adapter (100, 100', 100") for inserting or removing the tool can be arranged in such a manner that the insertion direction of the tool extends towards the base part (30, 30'); and
- a heating part (20) which is designed to heat the adapter (100, 100', 100") arranged in the base part (30, 30');
wherein the base part (30, 30') and the heating part (20) are shiftable with respect to each other in the insertion direction of the tool; and
the base part (30, 30') comprises a holding device (36) which is designed for holding the adapter (100, 100', 100") in a positionally fixed manner on the base part during the heating,
**characterized in that**
an internal taper of the holding device (36) is provided with an internal thread for interlocking interaction for holding the adapter (100, 100', 100") on the base part.

2. Device according to Claim 1, **characterized in that** the heating part (20) comprises at least one induction coil (24) which is designed to heat the adapter (100, 100', 100") arranged in the base part (30, 30') by electromagnetic induction, and/or
the holding device (36) is formed from electrically and/or magnetically weakly or non-conductive material.

3. Device according to Claim 1 or 2, **characterized in that** the holding device (36) is designed in order, during the holding of the adapter (100, 100', 100"), to surround the latter completely in certain sections, wherein preferably, in the section of fully surrounding the adapter (100, 100', 100"), the holding device (36) has one or more openings (38) in which magnetizable elements (38a) extend in the direction of the adapter (100, 100', 100") being held.

4. Device according to one of the preceding claims, **characterized in that** the heating part (20) furthermore comprises a stop portion (26) which is designed in order, during shifting of the heating part (20) in relation to the base part (30, 30'), to come into contact with the adapter (100, 100', 100") being held when in a predetermined relative position of the heating part (20) and the base part (30, 30'), wherein preferably the base part (30) is furthermore assigned a positioning means (32, 32') which is designed in order, during the shifting of the heating part (20) in relation to the base part (30, 30'), to move relative to the holding device (36), to be lockable with respect to the base part (30, 30') and, in a locked state, to be an abutment for the heating part (20) in the corresponding position relative to the base part (30, 30').

5. Device according to one of the preceding claims, **characterized in that** it furthermore comprises a cooling part which is designed to cool the adapter (100, 100', 100") arranged in the base part (30, 30') and to be shiftable with respect to the base part (30, 30') in the insertion direction of the tool.

6. System formed from a device according to one of Claims 1 to 5 and an adapter (100, 100', 100") for holding a tool for use in machine tools, which tool, in the held state, extends out of the adapter (100, 100', 100") on one side, wherein the adapter (100, 100', 100") preferably has the external dimensions of a collet.

7. System according to Claim 6, **characterized in that** the adapter (100, 100', 100") and the holding device (36) are provided with interacting threaded portions (102, 102') for interlocking interaction for holding the adapter (100, 100', 100") on the base part (30, 30'), wherein the adapter (100, 100', 100") and the holding device (36) have complementary dimensions in the form of an internal taper and external taper (36a, 104, 104') in the region of the interlocking interaction.

8. System according to Claim 6 or 7, **characterized in that** the adapter (100) comprises a thin-walled portion (106) which lies around the tool, and/or the system comprises a plurality of adapters (100, 100', 100") which have identical elements (102, 102') for interlocking interaction with the holding device (36) and differ in their external dimensions.

9. System according to one of Claims 6 to 8, furthermore comprising a collet chuck for use in a machine tool, said collet chuck being designed to receive the adapter or one of the adapters (100), and is optionally formed in such a manner that the thin-walled portion (106) of the adapter (100), in the accommodated state of the latter, protrudes over the collet chuck in the axial direction, wherein preferably the collect chuck is furthermore designed to receive either at least one of the adapters (100, 100', 100") or a collet.

10. System according to one of Claims 6 to 9, **characterized in that** the adapter has an external contour (110, 110', 110") which is cylindrical in certain sections and is provided with a respective conical external contour (104, 108; 104', 108'; 104", 108") in the axial direction between a first and a second portion.

11. System according to Claim 10, **characterized in that** the external contour (110, 110', 100") which is cylindrical in certain sections has an external diameter which is larger than that of the first portion with the conical external contour (104, 104', 104") and smaller than that of the second portion with the conical external contour (108, 108', 108").

12. System according to one of Claims 6 to 9, optionally with further features of Claims 10 and 11, **characterized in that** the adapter has an external thread (102, 102'), wherein preferably it has a multi-start external thread (102, 102') and/or the external thread is formed in the first portion with the conical external contour (104, 104'), for example an abutment surface which is wider than half the groove width of one thread turn is formed between the thread turns in the first portion with the conical external contour (104, 104').

13. System according to one of Claims 6 to 12, **characterized in that** the adapter is free of axial slots, and/or **in that** it has at least one groove, preferably four grooves, which groove or grooves (112', 112") is or are open towards the tool, and/or at least one channel (116") for conducting coolant.

14. Use of a system according to one of Claims 6 to 13 for inserting a tool into an adapter (100, 100', 100") or for removing the tool from the adapter (100, 100', 100"), comprising the steps of:
- holding the adapter (100, 100', 100") in the holding device (36) of the base part (30, 30') by means of threaded portions (102, 102') interacting in an interlocking manner;
- shifting the heating part (20) in relation to the base part (30, 30') until the adapter (100, 100', 100") is in a heating region of the heating part (20);
- operating the heating part in order to heat and to expand the adapter (100, 100', 100");
- inserting a tool into the adapter (100, 100', 100") or removing the tool from the adapter (100, 100', 100");
- optionally cooling the adapter (100, 100', 100") such that the adapter (100, 100', 100") shrinks and firmly surrounds the tool; and
- removing the adapter (100, 100', 100") from the holding device (36).

15. Adapter (100, 100', 100") for a system according to one of Claims 6 to 9, **characterized in that** it has an external contour (110, 110', 110") which is cylindrical in certain sections and is provided with a respective conical external contour (104, 108; 104', 108'; 104", 108") in the axial direction between a first and a second portion, and which adapter is provided with threaded portions (102, 102') interacting in an interlocking manner for holding the adapter (100, 100', 100") on the base part.

16. Adapter (100, 100', 100") according to Claim 15, **characterized in that** the external contour (110, 110', 100") which is cylindrical in certain section has an external diameter which is larger than that of the first portion with the conical external contour (104, 104', 104") and smaller than that of the second portion with the conical external contour (108, 108', 108").

17. Adapter (100, 100') for a system according to one of Claims 6 to 9, optionally with further features of Claims 15 and 16, **characterized in that** the adapter has an external thread (102, 102'), wherein preferably it has a multi-start external thread (102, 102') and/or the external thread is formed in the first portion with the conical external contour (104, 104'), for example an abutment surface which is wider than half the groove width of one thread turn is formed between the thread turns in the first portion with the conical external contour (104, 104'), and the adapter is provided with elements for interlocking interaction for holding the adapter (100, 100', 100") on the base part.

18. Adapter (100, 100', 100") according to one of Claims 15 to 17, **characterized in that** the adapter is free of axial slots, and/or **in that** it has at least one groove, preferably four grooves, which groove or grooves (112', 112") is or are open towards the tool, and/or at least one channel (116") for conducting coolant.

## Revendications

1. Dispositif pour le chauffage d'adaptateurs (100, 100', 100") pour le maintien d'un outil pour utilisation dans des machines-outils, comprenant :
- une partie de base (30, 30'), dans laquelle un adaptateur (100, 100', 100") peut être agencé pour l'introduction ou le retrait de l'outil de telle sorte que la direction d'introduction de l'outil s'étend vers la partie de base (30, 30') ; et
- une partie chauffante (20), qui est adaptée pour chauffer l'adaptateur (100, 100', 100") agencé dans la partie de base (30, 30') ;
la partie de base (30, 30') et la partie chauffante (20) peuvent être déplacées l'une par rapport à l'autre dans la direction d'introduction de l'outil ; et
la partie de base (30, 30') comprenant un dispositif de maintien (36) qui est adapté pour maintenir l'adaptateur (100, 100', 100") de manière fixe sur la partie de base pendant le chauffage,
**caractérisé en ce que**
un cône intérieur du dispositif de maintien (36) est pourvu d'un filetage intérieur pour une coopération par complémentarité de forme pour maintenir l'adaptateur (100, 100', 100") sur la partie de base.

2. Dispositif selon la revendication 1, **caractérisé en ce que** la partie chauffante (20) comprend au moins une bobine d'induction (24) qui est adaptée pour chauffer l'adaptateur (100, 100', 100") agencé dans la partie de base (30, 30') par induction électromagnétique,
et/ou
le dispositif de maintien (36) est formé de matériau faiblement ou non conducteur électriquement et/ou magnétiquement.

3. Dispositif selon la revendication 1 ou 2, **caractérisé en ce que** le dispositif de maintien (36) est adapté pour, lors du maintien de l'adaptateur (100, 100', 100"), entourer celui-ci par sections sur toute sa circonférence, de préférence
le dispositif de maintien (36) présentant, dans la section de l'entourage sur toute sa circonférence de l'adaptateur (100, 100', 100"), une ou plusieurs ouvertures (38) dans lesquelles des éléments magnétisables (38a) s'étendent en direction de l'adaptateur maintenu (100, 100', 100").

4. Dispositif selon l'une quelconque des revendications précédentes, **caractérisé en ce que** la partie chauffante (20) comprend en outre une section de butée (26) qui est adaptée pour venir en appui avec l'adaptateur maintenu (100, 100', 100") pendant un déplacement de la partie chauffante (20) par rapport à la partie de base (30, 30') dans une position relative prédéterminée de la partie chauffante (20) et de la partie de base (30, 30'), de préférence
un appareil de positionnement (32, 32') étant en outre associé à la partie de base (30), lequel est adapté pour se déplacer par rapport au dispositif de maintien (36) lors du déplacement de la partie chauffante (20) par rapport à la partie de base (30, 30'), pour pouvoir être bloqué par rapport à la partie de base (30, 30') et pour représenter, dans l'état bloqué, un appui pour la partie chauffante (20) dans la position relative correspondante par rapport à la partie de base (30, 30').

5. Dispositif selon l'une quelconque des revendications précédentes, **caractérisé en ce qu'**il comprend en outre une partie de refroidissement qui est adaptée pour refroidir l'adaptateur (100, 100', 100") agencé dans la partie de base (30, 30') et pour pouvoir être déplacée contre la partie de base (30, 30') dans la direction d'introduction de l'outil.

6. Système, formé d'un dispositif selon l'une quelconque des revendications 1 à 5 et d'un adaptateur (100, 100', 100") pour le maintien d'un outil pour utilisation dans des machines-outils, lequel outil, dans l'état maintenu, s'étend d'un côté hors de l'adaptateur (100, 100', 100"), l'adaptateur (100, 100', 100") présentant de préférence les dimensions extérieures d'une pince de serrage.

7. Système selon la revendication 6, **caractérisé en ce que** l'adaptateur (100, 100', 100") et le dispositif de maintien (36) sont pourvus de sections filetées coopérantes (102, 102') pour une coopération par complémentarité de forme pour le maintien de l'adaptateur (100, 100', 100") sur la partie de base (30, 30'), l'adaptateur (100, 100', 100") et le dispositif de maintien (36) présentant, dans la zone de la coopération par complémentarité de forme, des dimensions complémentaires sous la forme d'un cône intérieur ou extérieur (36a, 104, 104').

8. Système selon la revendication 6 ou 7, **caractérisé en ce que** l'adaptateur (100) comprend une section à paroi mince (106) qui s'appuie autour de l'outil et/ou le système comprend une pluralité d'adaptateurs (100, 100', 100") qui présentent des éléments identiques (102, 102') pour la coopération par complémentarité de forme avec le dispositif de maintien (36) et qui diffèrent par leurs dimensions extérieures.

9. Système selon l'une quelconque des revendications 6 à 8, comprenant en outre un mandrin de pince de serrage pour utilisation dans une machine-outil, qui est adapté pour recevoir l'adaptateur ou l'un des adaptateurs (100), et qui est éventuellement formé de telle sorte que la section à paroi mince (106) de l'adaptateur (100) dépasse le mandrin de pince de serrage en direction axiale dans son état reçu, de préférence
le mandrin de pince de serrage étant en outre adapté pour recevoir sélectivement au moins l'un des adaptateurs (100, 100', 100") ou une pince de serrage.

10. Système selon l'une quelconque des revendications 6 à 9, **caractérisé en ce que** l'adaptateur présente un contour extérieur cylindrique par sections (110, 110', 110"), qui est prévu dans la direction axiale entre une première et une deuxième section chacune à contour extérieur conique (104, 108 ; 104', 108' ; 104", 108").

11. Système selon la revendication 10, **caractérisé en ce que** le contour extérieur cylindrique par sections (110, 110', 100") présente un diamètre extérieur qui est supérieur à celui de la première section à contour extérieur conique (104, 104', 104") et inférieur à celui de la deuxième section à contour extérieur conique (108, 108', 108").

12. Système selon l'une quelconque des revendications 6 à 9, présentant éventuellement d'autres caractéristiques des revendications 10 et 11, **caractérisé en ce que** l'adaptateur présente un filetage extérieur (102, 102'), de préférence
il présente un filetage extérieur à plusieurs filets (102, 102') et/ou le filetage extérieur est réalisé à contour extérieur conique (104, 104') dans la première section, par exemple une surface d'appui est réalisée entre les filets dans la première section à contour extérieur conique (104, 104'), qui est plus large que la moitié de la largeur de rainure d'un filet.

13. Système selon l'une quelconque des revendications 6 à 12, **caractérisé en ce que** l'adaptateur est exempt de fentes axiales et/ou **en ce qu'**il présente au moins une, de préférence quatre, rainures (112', 112") ouvertes vers l'outil et/ou au moins un canal (116") pour le guidage d'agent de refroidissement.

14. Utilisation d'un système selon l'une quelconque des revendications 6 à 13 pour l'introduction d'un outil dans un adaptateur (100, 100', 100") ou le retrait de l'outil de l'adaptateur (100, 100', 100"), comprenant les étapes suivantes :
- le maintien de l'adaptateur (100, 100', 100") dans le dispositif de maintien (36) de la partie de base (30, 30') au moyen de sections filetées (102, 102') coopérantes par complémentarité de forme ;
- le déplacement de la partie chauffante (20) par rapport à la partie de base (30, 30') jusqu'à ce que l'adaptateur (100, 100', 100") se trouve dans une zone chauffante de la partie chauffante (20) ;
- l'actionnement de la partie chauffante afin de chauffer et de dilater l'adaptateur (100, 100', 100") ;
- l'introduction d'un outil dans l'adaptateur (100, 100', 100") ou le retrait de l'outil de l'adaptateur (100, 100', 100") ;
- éventuellement le refroidissement de l'adaptateur (100, 100', 100") de telle sorte que l'adaptateur (100, 100', 100") se rétracte et entoure fermement l'outil ; et
- le retrait de l'adaptateur (100, 100', 100") du dispositif de maintien (36).

15. Adaptateur (100, 100', 100") pour un système selon l'une quelconque des revendications 6 à 9, **caractérisé en ce qu'**il présente un contour extérieur cylindrique par sections (110, 110', 110"), qui est prévu dans la direction axiale entre une première et une deuxième section chacune à contour extérieur conique (104, 108 ; 104', 108' ; 104", 108"), et qu'il est fourni avec des sections filetées coopérantes par complémentarité de forme (102, 102') pour le maintien de l'adaptateur (100, 100', 100") sur la partie de base.

16. Adaptateur (100, 100', 100") selon la revendication 15, **caractérisé en ce que** le contour extérieur cylindrique par sections (110, 110', 100") présente un diamètre extérieur qui est supérieur à celui de la première section à contour extérieur conique (104, 104', 104") et inférieur à celui de la deuxième section à contour extérieur conique (108, 108', 108").

17. Adaptateur (100, 100') pour un système selon l'une quelconque des revendications 6 à 9, présentant éventuellement d'autres caractéristiques des revendications 15 et 16, **caractérisé en ce qu'**il présente un filetage extérieur (102, 102'), de préférence il présente un filetage extérieur à plusieurs filets (102, 102') et/ou le filetage extérieur est réalisé à contour extérieur conique (104, 104') dans la première section, par exemple une surface d'appui est réalisée entre les filets dans la première section à contour extérieur conique (104, 104'), qui est plus large que la moitié de la largeur de rainure d'un filet, et il est fourni avec des éléments pour une coopération par complémentarité de forme pour le maintien de l'adaptateur (100, 100', 100") sur la partie de base.

18. Adaptateur (100, 100', 100") selon l'une quelconque des revendications 15 à 17, **caractérisé en ce qu'**il est exempt de fentes axiales et/ou **en ce qu'**il présente au moins une, de préférence quatre, rainures (112', 112") ouvertes vers l'outil et/ou au moins un canal (116") pour le guidage d'un agent de refroidissement.
